# EUROPÄISCHE PATENTSCHRIFT

(11) **EP 1 897 725 B1**
(45) Veröffentlichungstag und Bekanntmachung des Hinweises auf die Patenterteilung: **09.02.2011**
(21) Anmeldenummer: 07015443.0
(22) Anmeldetag: 07.08.2007
(51) Int. Cl.: B60J 7/12

(54) **Abspannanordnung für einen heckseitigen Abschnitt eines Verdeckbezugs und Cabriolet**
Tensioning device for the rear section of a soft top and convertible
Dispositif de tension pour une section arrière d'une capote et cabriolet

(30) Priorität: 08.09.2006 DE 102006042291
(43) Veröffentlichungstag der Anmeldung: 12.03.2008
(73) Patentinhaber: Dr. Ing. h.c. F. Porsche AG, 70435 Stuttgart (DE)
(72) Erfinder: Fröschle, Mathias, 73760 Ostfildern (DE); Czechtizky, Timo, 73119 Zell u. A. (DE)

(56) Entgegenhaltungen:
- EP-A- 1 398 189
- WO-A-2006/105744
- DE-A1- 10 029 471
- DE-A1- 19 750 418
- US-A- 3 630 568

## Beschreibung

Bei der Erfindung wird ausgegangen von einer Abspannanordnung für einen heckseitigen Abschnitt eines Verdeckbezugs, gemäß Oberbegriff des Patentanspruchs 1, sowie von einem Cabriolet gemäß Oberbegriff des Patentanspruchs 8.

Eine Abspannanordnung wird beispielweise in der DE 19758418 beschrieben.

Eine gattungsbildende Abspannanordnung an einem Cabriolet ist aus der DE 91 02 150 U1 ersichtlich und dient zum gespannten Befestigen eines Endabschnitts eines Verdeckbezugs an einer Karosserie des Cabriolets. Der heckseitige Endabschnitt des Verdeckbezugs ist mit einem ersten Leistenabschnitt einer elastischen Befestigungsleiste beispielsweise durch eine Naht fest verbunden. Ein zweiter Leistenabschnitt der Befestigungsleiste ist mit einem Karosserieelement des Cabriolets verbunden, d.h. auf das Karosserieelement aufgesteckt. Das Karosserieelement ist als Blechformteil derart ausgeführt, dass es ein Wasserauffangprofil bildet, das in Fahrzeugquerrichtung rinnenartig verläuft und das unterhalb des Endabschnitts des Verdeckbezugs angeordnet ist, so dass zwischen einem Verdeckkastendeckel und dem Verdeckbezug eindringendes Wasser aufgefangen werden kann.

Aufgabe der Erfindung ist es, eine Abspannanordnung der eingangs genannten Art zu vereinfachen.

Gelöst wird diese Aufgabe erfindungsgemäß mit einer Abspannanordnung für einen Verdeckbezug, die die in Anspruch 1 genannten Merkmale aufweist. Ferner wird die Aufgabe mit einem Cabriolet mit den Merkmalen des Anspruchs 8 gelöst. Ausführungsbeispiele sind jeweils in den abhängigen Unteransprüchen angegeben.

Die mit der Erfindung hauptsächlich erzielten Vorteile sind darin zu sehen, dass mit der erfindungsgemäßen Befestigungsleiste sowohl der Verdeckbezug an dem Karosserieelement befestigt werden kann als auch das Wasserauffangprofil von der Befestigungsleiste, nämlich von dem ersten Leistenanschnitt gebildet wird, wodurch das aus dem Stand der Technik bekannte Blechprofil als Wasserauffangprofil nicht weiter benötigt wird. Außerdem ist vorteilhaft, dass durch die Befestigung des Endabschnitts direkt an dem Wasserauffangprofil eine Trennstelle eingespart werden kann, da die Befestigungsleiste nicht mehr auf das Karosserieelement aufgesteckt ist.

Besonders bevorzugt wird ein Ausführungsbeispiel gemäß Anspruch 2, nach dem das Wasserauffangprofil vollständig von dem ersten Leistenabschnitt gebildet wird.

Die Wasserführung bzw. die Dichtigkeit zwischen Verdeckbezug und Wasserauffangprofil wird weiter optimiert, wenn - wie nach Anspruch 3 vorgesehen - der Endabschnitt des Verdeckbezugs bis in das Wasserauffangprofil verlegt und dort vorzugsweise - wie Anspruch 5 angibt - durch Formschlusselemente lösbar befestigt wird.

Erfindungsgemäß ist die Befestigungsleiste montagegünstig zugänglich, um sie mit dem Karosserieelement, beispielsweise einer Wandung eines Verdeckkastens, einfach lösbar verbinden zu können. Insbesondere bei einem Cabriolet dessen Antriebsmaschine in Mittelmotoranordnung in die Karosserie eingesetzt ist, ist dies von Vorteil, da der Verdeckbezug für Wartungsarbeiten an der Antriebseinheit (Motor mit Getriebe) hin und wieder gelöst werden muss.

Gemäß einem in Anspruch 6 angeführten Ausführungsbeispiel kann der heckseitige Endabschnitt des Verdeckbezugs im Wesentlichen vollständig mit dem Karosserieelement verbunden werden.

Bevorzugt wird ein Ausführungsbeispiel mit den Merkmalen des Anspruchs 7, wonach nur relativ wenige Befestigungselemente vorgesehen sind, um die Befestigungsleiste mit dem Karosserieelement verbinden zu können, was die Montagezeit deutlich verringert.

Sofern eine gemäß Anspruch 10 vorgesehene Karosserieöffnung am Verdeckkasten vorhanden ist, kann die zumindest abschnittweise flexibel ausgeführte Befestigungsleiste ohne weiteres in den Verdeckkasten eingesetzt werden, in dem ihre freien Enden aufeinanderzubewegt, also quasi gebogen werden.

Die Erfindung wird nachfolgend anhand eines Ausführungsbeispiels mit Bezug auf die Zeichnung näher erläutert. Es zeigen:
- Fig. 1: in einer Perspektive ausschnittweise ein Cabriolet mit einem Verdeck in Schließstellung,
- Fig. 2: einen Schnitt durch eine Abspanneinrichtung entlang der Linie II-II in Fig. 1 und
- Fig. 3: das nun ohne Verdeckbezug dargestellte Verdeck mit einer Befestigungsleiste der Abspanneinrichtung beim Einsetzen in einen Verdeckkasten.

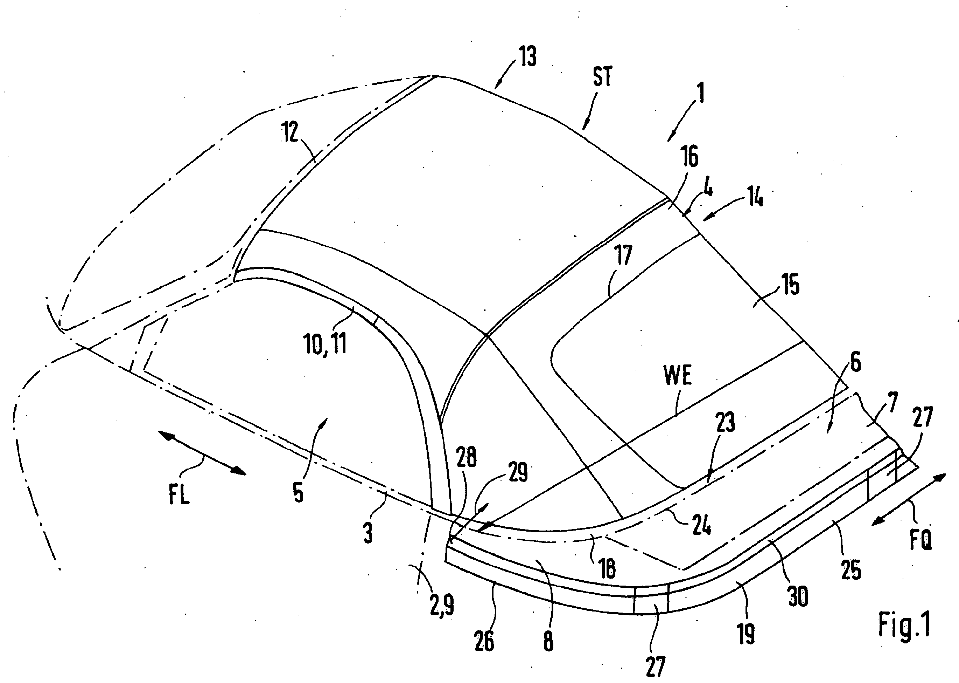

In Fig. 1 ist ein auch als offenes Kraftfahrzeug bezeichnetes Cabriolet 1 ausschnittweise zu sehen. Bezüglich einer Mittellängsebene ist lediglich eine Fahrzeughälfte dargestellt; die nicht gezeigte andere Fahrzeughälfte ist jedoch spiegelbildlich ausgeführt und wird deshalb nicht näher erläutert. Das Cabriolet 1 weist eine Karosserie 2 auf, auf die oberhalb einer Gürtellinie 3 ein Verdeck 4 aufgesetzt ist, das aus einer einen Fahrgastraum 5 überspannenden Schließstellung ST in eine nicht gezeigte zusammengefaltete Ablagestellung in einen heckseitigen Verdeckkasten 6 bewegt werden kann. Der Verdeckkasten 6 wird von einem feststehenden, d.h. unbeweglichen Verdeckkastendeckel 7 teilweise nach oben verschlossen, der sich an eine hintere Seitenwand 8 anschließt und der einen Teil einer Außenhaut 9 der Karosserie 2 bildet. Unterhalb des Verdeckkastens 7 ist in einen nicht zu sehenden Motorraum eine ebenfalls nicht zu sehende Antriebseinheit in so genannter Mittelmotoranordnung eingesetzt.

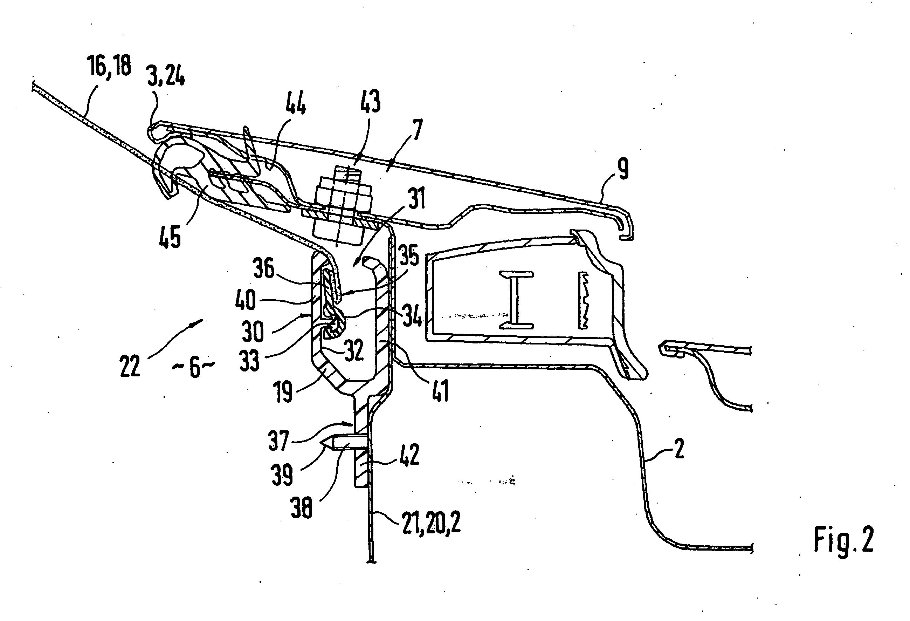

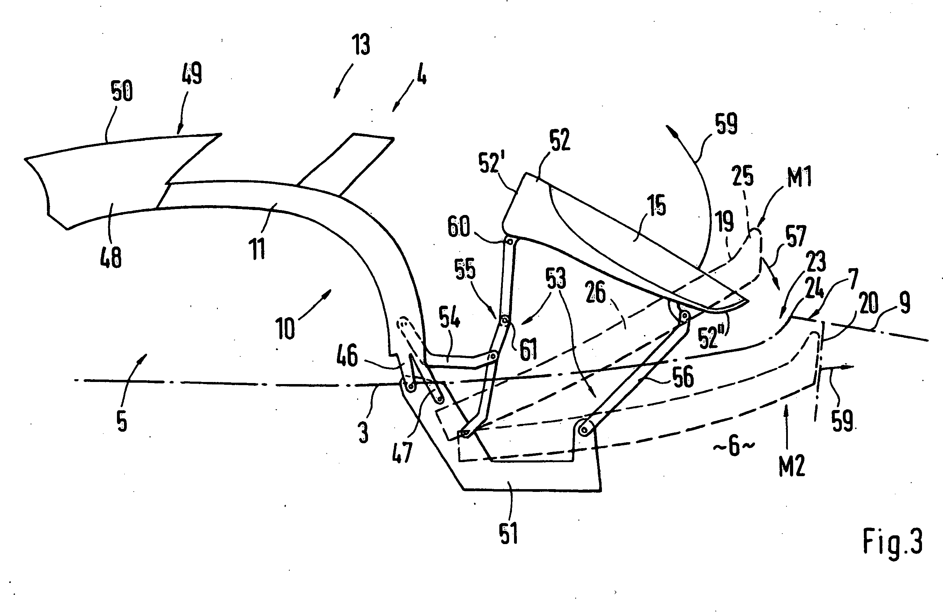

Das Verdeck 4 besitzt ein Verdeckgestell 10, vgl. auch Fig. 3, von dem in Fig. 1 lediglich ein seitlicher, bogenförmiger Dachrahmen 11 zu sehen ist, der sich über die Gürtellinie 3 hinaus bis zu einem oberen Windlauf 12 erstreckt. Das Verdeck 4 weist ferner mehrere Dachabschnitte, vorzugsweise zwei Dachabschnitte 13 und 14 auf, von denen der Dachabschnitt 13 ein vorderes Dachteil und der Dachabschnitt 14 ein hinteres Dachteil mit einer Heckscheibe 15 bilden. An dem Verdeckgestell 10 ist zumindest abschnittweise ein Verdeckbezug 16 gehalten, der mit einem Scheibenausschnitt 17 für die Heckscheibe 15 ausgestattet ist. Zwischen den beiden Dachrahmen 11 erstreckt sich der Verdeckbezug 16 mit einem heckseitigen Endabschnitt 18 bis unter die Gürtellinie 3 und ist dort mit einer - in Draufsicht gesehen - U-förmigen Befestigungsleiste 19 an einem Karosserieelement 20, vorzugsweise einer den Verdeckkasten 6 begrenzende Wandung 21 (Fig. 2), lösbar gehalten derart, dass der Verdeckbezug 16 in der Schließstellung ST mit gewünschter Stoffspannung in Lage gehalten und der Endabschnitt 18 bis unter die Gürtellinie 3 abgespannt wird, wofür eine Abspannanordnung 22 vorgesehen ist, die zumindest die Befestigungsleiste 19 aufweist und die weiter unten im Zusammenhang mit Fig. 2 näher beschrieben ist.

Fig. 1 zeigt weiterhin eine heckseitige obere Karosserieöffnung 23, durch die hindurch das Verdeck 4 in den darunter liegenden Verdeckkasten 6 abgelegt werden kann. Heckseitig begrenzt wird die Karosserieöffnung 23 durch die Seitenwände 8 und durch den Verdeckkastendeckel 7. Ihr Begrenzungsrand 24 liegt somit in der Gürtellinie 3. Die Karosserieöffnung 23 besitzt eine in Fahrzeugquerrichtung FQ zwischen den Seitenwänden 8 gemessene Öffnungsweite WE. Die unterhalb der Außenhaut 9 liegende U-förmige Befestigungsleiste 19 weist eine Basis 25 auf, die sich in Fahrzeugquerrichtung FQ erstreckt. Von der Basis 25 gehen Schenkel 26 aus, die in Fahrzeuglängsrichtung FL nach vorn in Richtung eines nicht gezeigten Fahrzeugsbugs orientiert sind. Es ist ersichtlich, dass die Erstreckung der Befestigungsleiste 19 in Fahrzeugquerrichtung FQ größer ist als die Öffnungsweite WE der Karosserieöffnung 23. Um die mit dem Endabschnitt 18 des Verdeckbezugs 16 verbundene Befestigungsleiste 19 durch die Karosserieöffnung 23 hindurch in den Verdeckkasten 6 einsetzten zu können, ist die Befestigungsleiste 19 in zumindest einem Biegeabschnitt 27 biegbar ausgeführt. Dadurch können die freien Enden 28 der Schenkel aufeinanderzubewegt (Pfeil 29) werden, d.h. die Befestigungsleiste 19 kann so gebogen werden, dass sie durch die Karosserieöffnung 13 hindurch passt. Alternativ kann anstelle des Biegeabschnitts 27 ein Scharnier, insbesondere Filmscharnier, vorgesehen sein. Denkbar wäre es ferner, anstelle des mittigen Biegeabschnitts 27 einen oder zwei seitliche Biegeabschnitte 27 benachbart zu den Schenkel 26 oder in den Schenkeln 26 auszubilden oder dort ein Scharnier vorzusehen. In einer weiteren Alternative kann die gesamte Befestigungsleiste 19 als biegbares Kunststoffprofil ausgeführt sein.

Gemäß Fig. 2 ist weist die unterhalb des Endabschnitts 18 liegende Befestigungsleiste 19 einen ersten Leistenabschnitt 30 auf, an dem der Verdeckbezug 16 mit seinem Endabschnitt 18 vorzugsweise lösbar befestigt ist. Der Leistenabschnitt 30 ist als Wasserauffangprofil 31 ausgeführt und weist dafür einen U- oder V-förmigen Querschnitt auf, so dass zwischen dem Verdeckbezug 16 und dem Begrenzungsrand 24 der Karosserieöffnung 23 eintretendes Wasser aufgefangen werden kann. Der Endabschnitt 18 des Verdeckbezugs 16 ist bis in das Innere des Wasserauffangprofils 31 hinein verlegt und dort angebunden. Von der Innenwand 32 des Wasserauffangprofils 31 geht, vorzugsweise einstückig, zumindest ein erstes Formschlusselement 33, insbesondere eine Pilzprofil bzw. ein Pilzzapfen aus. Ein Gegenstück als zweites Formschlusselement 34 ist im Randbereich 35 des Endabschnitts 18 angebracht. Zur Befestigung des Endabschnitts 18 an dem Wasserauffangprofil 31 werden beide Formschlusselemente 33 und 34 in Eingriff miteinander gebracht. Das zweite Formschlusselement 34 ist beispielsweise an einem streifenförmigen Keder 36 aus Kunststoff ausgebildet, der an den Randbereich angespritzt oder angenäht oder angeklebt sein kann. Alternativ kann der Randbereich 35 durch Kleben an der Innenwand 32 befestigt sein; auch andere Befestigungsmaßnahmen wären denkbar.

Die Befestigungsleiste 19 besitzt einen zweiten Leistenabschnitt 37, der mit dem ersten Leistenabschnitt 30 verbunden ist. Der zweite Leistenabschnitt 37 bildet einen Befestigungsabschnitt, mit dem die Befestigungsleiste 19 lösbar an dem Karosserieelement 20 befestigt werden kann. Der streifenförmige Leistenabschnitt 37 liegt an dem Karosserieelement 20 an und wird von zumindest einem Befestigungselement 38 daran gehalten. Der Leistenabschnitt 37 wird von einem Befestigungselement 38 durchdrungen, das an dem Karosserieelement 20 befestigt ist. Auf das freie Ende 39 des Befestigungselements 38, insbesondere Fixierbolzen, kann ein nicht gezeigtes Sicherungsmittel, beispielsweise eine Schraubenmutter, aufgebracht sein, um die Befestigungsleiste 19 auf dem Karosserieelement 20 zu halten. Über die Erstreckung der Befestigungsleiste 19 verteilt können mehrere Befestigungselemente 38 vorgesehen sein. Insbesondere für jeden Schenkel 26 und die Basis 25 ist jeweils zumindest ein Befestigungselement 38 vorgesehen.

Wie vorstehend erwähnt, kann die Befestigungsleiste 19 einstückig und insbesondere als Kunststoffprofil ausgeführt sein. Im Querschnitt ist die Befestigungsleiste zur Bildung der beiden Leistenabschnitte 30 und 37 daher etwa gabelförmig bzw. γ-förmig ausgeführt, wobei zumindest zwei Gabelabschnitte 40 und 41 das Wasserauffangprofil 31 bzw. den ersten Leistenabschnitt 30 und ein Basisabschnitt 42 den zweiten Leistenabschnitt 37 bilden. Von dem Basisabschnitt 42 gehen die beiden Gabelabschnitte 40 und 41 aus.

Aus Fig. 2 ist noch ersichtlich, dass der feststehende Verdeckkastendeckel 7 an der Karosserie 2 und beispielsweise an einem Fortsatz des Karosserieelements 20 befestigt ist, vorzugsweise dort angeschraubt ist, wofür eine Verschraubung 43 verwendet werden kann. An der dem Verdeckkasten 6 zugewandten Unterseite 44 des Verdeckkastendeckels 7 liegt die Verschraubung 43. Außerdem ist dieser Unterseite 44 benachbart zum Begrenzungsrand 24 noch ein Dichtungsprofil 45 zugeordnet, das auf dem Verdeckbezug 16 aufliegt, wenn das Verdeck in Schließstellung ST vorliegt. Das Dichtungsprofil 45 kann an dem Fortsatz des Karosserieelements 20 oder am Verdeckkastendeckel 7 befestigt sein.

Anhand von Fig. 3 wird das Verdeck 4 näher erläutert, wobei dieselben Teile wie in den Fig. 1 und 2 mit denselben Bezugszeichen versehen sind: Unter dem nicht eingezeichneten Verdeckbezug 16 liegt das Verdeckgestell 10, welches den Dachrahmen 11 aufweist, der in Schließstellung ST beispielsweise von zwei Hauptlenkern 46 und 47 sowie von einem sich dran anschließenden Festabschnitt 48 gebildet ist, der Bestandteil eines so genannten vorderen Intergral-Dachrahmens 49 sein kann, der zwischen den seitlichen Dachrahmen einen flächigen Abschnitt 50 besitzt. Über die Hauptlenker 46 und 47 ist der vordere Dachabschnitt 13 an einem unterhalb der Gürtellinie 3 liegenden Verdecklager 51 beweglich abgestützt. Der hintere Dachabschnitt 14, der die mit einem Rahmen 52 umgebene Heckscheibe 15 aufweist, wird über eine Lenkeranordnung 53 beispielsweise an dem Verdecklager 51 beweglich oder der Karosserie 2 abgestützt und kinematisch in das Verdeckgestell 10 über einen Koppellenker 54 eingebunden. Eine vorderes Gestänge 55 der Lenkeranordnung 53 ist mit dem Koppellenker 54 verbunden und erstreckt sich zwischen einem oberen Rahmenschenkel 52' des Rahmens 52 und dem Verdecklager 51. Ein hinteres Gestänge 56 verbindet benachbart zu einem unteren Rahmenschenkel 52" den Rahmen 52 ebenfalls mit dem Verdecklager 51.

Bei der Montage des Verdecks 4 an der Karosserie 2 wird wie folgt vorgegangen: Die Baueinheit aus Verdecklager 51 und Verdeck 4, die ggf. noch eine Überrollbügelanordnung (nicht gezeigt) umfassen kann, an der das Verdecklager 51 angebracht sein kann, wird in die Karosserie 2 eingesetzt. Dabei ist der Endabschnitt 18 des Verdeckbezugs 16 an der Befestigungsleiste 19 befestigt, die in Fig. 3 in einer oberen, gestrichelt eingezeichneten Vormontageposition M1 gezeigt ist. Wie vorstehend beschrieben, wird in der Vormontageposition M1 die Befestigungsleiste 19 mit ihrer Basis 25 und den Schenkeln 26 so gebogen, dass sie durch die Karosserieöffnung 23 hindurch in den Verdeckkasten 6 eingebracht, d.h. nach unten verschwenkt, werden kann, was durch einen Pfeil 57 angedeutet ist. Nachdem die Befestigungsleiste 19 die Karosserieöffnung 23 passiert hat und innerhalb des Verdeckkastens 6 liegt, wird sie nach hinten (Pfeil 58) in ihre gestrichelt eingezeichnete Endmontageposition M2 verschoben, bis sie am Karosserieelement 20 anliegt; anschließend wird sie über die Befestigungselemente 38 an dem Karosserieelement 20 lösbar befestigt.

Soll ein Zugang zu dem unter dem Verdeckkasten 6 liegenden Motorraum geschaffen werden, beispielsweise für eine Wartungsarbeit an der Antriebseinheit, werden die Befestigungselemente 38 für die Befestigungsleiste 19 wieder gelöst und die Befestigungsleiste 19 wird in umgekehrter Reihefolge wieder aus dem Verdeckkasten 6 entnommen. Danach wird der Rahmen 52 der Heckscheibe 15 von der Lenkeranordnung 53 zumindest teilweise gelöst, so dass das hintere Dachteil 14 zusammen mit dem Verdeckbezug 16 und der Befestigungsleiste 19 in Pfeilrichtung 59 geschwenkt werden kann. Vorzugsweise wird lediglich das hintere Gestänge 56 vorn Heckscheibenrahmen 52 gelöst, so dass das hintere Dachteil um eine Gelenkachse 60 und/oder 61 des vorderen Gestänges 55 in Pfeilrichtung 59 geschwenkt werden, wodurch der Verdeckkasten 6 freigegeben wird; damit besteht auch Zugang zu dem darunter liegenden Motorraum.

## Patentansprüche

1. Abspannanordnung (22) für einen heckseitigen Endabschnitt (18) eines Verdeckbezugs (16), mit einer Befestigungsleiste (19), die mit einem ersten Leistenabschnitt (30) mit dem Verdeckbezug (16) und mit einem zweiten Leistenabschnitt (37) lösbar mit einem Karosserieelement (20) eines Cabriolets (1) verbindbar ist, und mit einem in Fahrzeugquerrichtung (FQ) verlaufenden Wasserauffangprofil (31), das unterhalb des heckseitigen Endabschnitts (18) des Verdeckbezugs (16) angeordnet ist, wobei der erste Leistenabschnitt (30) der Befestigungsleiste (19) als Wasserauffangprofil (31) ausgeführt ist, **dadurch gekennzeichnet, dass** die Befestigungsleiste (19) zumindest bereichsweise flexibel ausgeführt ist und dass die Befestigungsleiste (19) im Querschnitt etwa Y-förmig ausgeführt ist und mithin zumindest zwei Gabelabschnitte (40, 41) und einen Basisabschnitt (42) umfasst, wobei die Gabelabschnitte (40, 41) das Wasserauffangprofil (31) bzw. den ersten Leistenabschnitt (30) und der Basisabschnitt (42) den zweiten Leistenabschnitt (37) bilden.

2. Abspannanordnung nach Anspruch 1, **dadurch gekennzeichnet, dass** das Wasserauffangprofil (31) im Querschnitt etwa U- oder V-förmig ausgeführt ist.

3. Abspannanordnung nach Anspruch 1 oder 2, **dadurch gekennzeichnet, dass** der heckseitige Endabschnitt (18) des Verdeckbezugs (16) bis in das Wasserauffangprofil (31) hinein verlegt ist.

4. Abspannanordnung nach Anspruch 1, **dadurch gekennzeichnet, dass** die Befestigungsleiste (19) mit den beiden Leistenabschnitten (30, 37) zumindest abschnittweise als Kunststoffprofil ausgeführt ist.

5. Abspannanordnung nach einem der vorhergehenden Ansprüche, **dadurch gekennzeichnet, dass** der ersten Leistenabschnitt (30) bzw. das Wasserauffangprofil (31) wenigstens ein innen liegendes erstes Formschlusselement (33) besitzt und dass an dem Endabschnitt (18) des Verdeckbezugs (16) ein zweites Formschlusselement (34) ausgebildet ist, wobei die beiden Formschlusselemente (33, 34) zur Befestigung des Endabschnitts (18) an dem Wasserauffangprofil (31) ineinander greifen.

6. Abspannanordnung nach einem der Ansprüche 1 oder 4, **dadurch gekennzeichnet, dass** die Befestigungsleiste (19) - in Draufsicht gesehen - etwa U-förmig mit einer in Fahrzeugquerrichtung (FQ) verlaufenden Basis (25) und mit seitlichen, daran anschließenden und in Fahrzeuglängsrichtung (FL) verlaufenden Schenkeln (26) ausgeführt ist.

7. Abspannanordnung nach Anspruch 6, **dadurch gekennzeichnet, dass** die U-förmige Befestigungsleiste (19) mit jeweils zumindest einem Befestigungselement (38) mit ihrer Basis (25) und den beiden Schenkeln (26) mit dem Karosserieelement (20) lösbar verbindbar ist.

8. Cabriolet (1) mit einem Verdeck (4), **gekennzeichnet durch** eine Abspannanordnung (22) nach zumindest einem der Ansprüche 1 bis 7.

9. Cabriolet nach Anspruch 8, weiterhin aufweisend einen feststehenden Verdeckkastendeckel (7), der einen Verdeckkasten (6) zur Aufnahme des Verdecks (4) in seiner Ablagestellung zumindest teilweise verschließt.

10. Cabriolet nach Anspruch 8 oder 9, **dadurch gekennzeichnet, dass** - in Draufsicht gesehen - eine obere Karosserieöffnung (23) des Verdeckkastens (6) eine in Fahrzeugquerrichtung (FQ) gemessene Öffnungsweite (WE) aufweist, die geringer ist als die Erstreckung der Befestigungsleiste (19) in der Fahrzeugquerrichtung (FQ).

## Claims

1. Anchoring arrangement (22) for a rear end section (18) of a top cloth (16), with a fastening strip (19), which can be connected by a first strip section (30) to the top cloth (16) and by a second strip section (37) releasably to a body element (20) of a convertible (1), and with a water collecting profile (31) which runs in the transverse direction (FQ) of the vehicle and is arranged below the rear end section (18) of the top cloth (16), the first strip section (30) of the fastening strip (19) being designed as a water collecting profile (31), **characterized in that** the fastening strip (19) is of flexible design at least in some sections and **in that** the fastening strip (19) is of approximately Y-shaped design in cross section and consequently comprises at least two fork sections (40, 41) and a base section (42), the fork sections (40, 41) forming the water collecting profile (31) or the first strip section (30) and the base section (42) forming the second strip section (37).

2. Anchoring arrangement according to Claim 1, **characterized in that** the water collecting profile (31) is of approximately U- or V-shaped design in cross section.

3. Anchoring arrangement according to Claim 1 or 2, **characterized in that** the rear end section (18) of the top cloth (16) is positioned such that it reaches into the water collecting profile (31).

4. Anchoring arrangement according to Claim 1, **characterized in that** the fastening strip (19) with the two strip sections (30, 37) is designed at least in some sections as a plastic profile.

5. Anchoring arrangement according to one of the preceding claims, **characterized in that** the first strip section (30) or the water collecting profile (31) has at least one first form-fitting element (33) situated on the inside, and **in that** a second form-fitting element (34) is formed on the end section (18) of the top cloth (16), the two form-fitting elements (33, 34) engaging one inside the other in order to fasten the end section (18) to the water collecting profile (31).

6. Anchoring arrangement according to either of Claims 1 and 4, **characterized in that** the fastening strip (19) - as seen in plan view - is of approximately U-shaped design with a base (25) running in the transverse direction (FQ) of the vehicle and with lateral limbs (26) which adjoin said base and run in the longitudinal direction (FL) of the vehicle.

7. Anchoring arrangement according to Claim 6, **characterized in that** the U-shaped fastening strip (19) can be connected releasably to the body element (20) by in each case at least one fastening element (38) with its base (25) and the two limbs (26).

8. Convertible (1) with a top (4), **characterized by** an anchoring arrangement (22) according to at least one of Claims 1 to 7.

9. Convertible according to Claim 8, furthermore having a fixed top compartment lid (7) which at least partially closes a top compartment (6) for accommodating the top (4) in its storage position.

10. Convertible according to Claim 8 or 9, **characterized in that** - as seen in plan view - an upper body opening (23) of the top compartment (6) has an opening width (WE) which is measured in the transverse direction (FQ) of the vehicle and is smaller than the extent of the fastening strip (19) in the transverse direction (FQ) of the vehicle.

## Revendications

1. Dispositif de tension (22) pour une section d'extrémité arrière (18) d'une capote (16), avec une baguette de fixation (19) pouvant être reliée à la capote (16) à l'aide d'une première section de baguette (30) et de façon amovible à un élément de carrosserie (20) d'un cabriolet (1) à l'aide d'une deuxième section de baguette (37) et avec un profilé de collecte d'eau (31) s'étendant dans la direction transversale du véhicule (FQ) disposé en dessous de la section d'extrémité arrière (18) de la capote (16), la première section de baguette (30) de la baguette de fixation (19) prenant la forme d'un profilé de collecte d'eau (31), **caractérisé en ce que** la baguette de fixation (19) est réalisée de façon au moins en partie flexible et que la baguette de fixation (19) prend une forme quelque peu en Y en section transversale et comprend au moins deux sections fourchues (40, 41) et une section de base (42), les sections fourchues (40, 41) formant le profilé de collecte d'eau (31) et/ou la première section de baguette (30) et la section de base (42) formant la deuxième section de baguette (37).

2. Dispositif de tension selon la revendication 1, **caractérisé en ce que** le profilé de collecte d'eau (31) prend une forme quelque peu en U ou en V en section transversale.

3. Dispositif de tension selon la revendication 1 ou 2, **caractérisé en ce que** la section d'extrémité arrière (18) de la capote (16) est déplacée vers l'intérieur jusque dans le profilé de collecte d'eau (31).

4. Dispositif de tension selon la revendication 1, **caractérisé en ce que** la baguette de fixation (19) est réalisée, avec les deux sections de baguette (30, 37) sous la forme d'un profilé en matière synthétique, au moins sur une partie de la section.

5. Dispositif de tension selon l'une quelconque des revendications précédentes, **caractérisé en ce que** la première section de baguette (30) et/ou le profilé de collecte d'eau (31) possèdent au moins un premier élément de complémentarité de formes (33) reposant à l'intérieur et qu'un deuxième élément de complémentarité de formes (34) est réalisé au niveau de la section d'extrémité (18) de la capote (16), les deux éléments de complémentarité de formes (33, 34) s'engrenant l'un dans l'autre pour fixer la section d'extrémité (18) au niveau du profilé de collecte d'eau (31).

6. Dispositif de tension selon l'une quelconque des revendications 1 ou 4, **caractérisé en ce que** la baguette de fixation (19) - vue en vue en élévation - prend quelque peu une forme en U avec une base (25) s'étendant dans la direction transversale du véhicule (FQ) et des côtés (26) latéraux connexes s'étendant dans la direction longitudinale du véhicule (FL).

7. Dispositif de tension selon la revendication 6, **caractérisé en ce que** la baguette de fixation (19) en U peut être reliée respectivement de façon amovible à sa base (25) par l'intermédiaire d'au moins un élément de fixation (38) et à l'élément de carrosserie (20) par l'intermédiaire des deux côtés (26).

8. Cabriolet (1) avec une capote (4), **caractérisé par** un dispositif de tension (22) selon au moins l'une quelconque des revendications 1 à 7.

9. Cabriolet selon la revendication 8, comportant en outre un cache d'extrémité de caisson de capote (7), fixe verrouillant un caisson de capote (6) pour loger au moins en partie la capote (4) dans sa position rangée.

10. Cabriolet selon la revendication 8 ou 9, **caractérisé en ce que** - vue en vue en élévation - une ouverture de carrosserie supérieure (23) du caisson de capote (6) comporte une largeur d'ouverture (WE) mesurée dans la direction transversale du véhicule (FQ) plus réduite que l'élargissement de la baguette de fixation (19) dans la direction transversale du véhicule (FQ).
